# EUROPÄISCHE PATENTANMELDUNG

(11) **EP 3 754 812 A1**
(43) Veröffentlichungstag der Anmeldung: **23.12.2020**
(21) Anmeldenummer: 20180491.1
(22) Anmeldetag: 17.06.2020
(51) Int. Cl.: H02K 1/18, H02K 1/20, H02K 5/20

(54) **STATOR, ELEKTRISCHE MASCHINE, FAHRZEUG UND VERFAHREN ZUR HERSTELLUNG EINES STATORS**

(30) Priorität: 21.06.2019 DE 102019116822
(71) Anmelder: Valeo Siemens eAutomotive Germany GmbH, 91056 Erlangen (DE)
(72) Erfinder: DOTZ, Boris, 81241 München (DE); WAIDER, Sebastian, 36100 Petersberg (DE)
(74) Vertreter: Dr. Gassner & Partner mbB

(57) **Zusammenfassung**

Die Erfindung betrifft einen Stator (2), eine den Stator (2) umfassende elektrische Maschine (1), ein die elektrische Maschine (1) umfassendes Fahrzeug (21), und ein Verfahren zur Herstellung des Stators (2). Der Stator (2) umfasst ein Statorblechpaket (5) und ein Gehäuseelement (6). Das Statorblechpaket (5) umfasst eine Vielzahl von geschichteten Statorblechen (8), wobei jedes Statorblech (8) eine Vielzahl von jeweils radial innen an einer Winkelposition ausgebildeten Zahnabschnitten (10) und radial außen an den Winkelpositionen jeweils eine Eintiefung (13) mit einem zumindest abschnittsweise gekrümmt ausgebildeten Rand (14) aufweist, der zwei radial nach außen gewölbte, sich in einem Schnittpunkt (17) treffende, jeweils ein Kreissektorbogen beschreibende Randabschnitte (15, 16) aufweist. Das Gehäuseelement (6) umfasst ein zylindrisches Innenvolumen (7), in dem das Statorblechpaket (5) angeordnet ist, wobei die Eintiefungen (13) Kühlkanäle bilden.

## Beschreibung

Die vorliegende Erfindung betrifft einen Stator, eine elektrische Maschine, ein Fahrzeug und ein Verfahren zur Herstellung eines Stators.

Wenn elektrische Maschinen betrieben werden, verursachen Stromwärme- und Ummagnetisierungsverluste Wärme in einem aus Statorblechen gebildeten Statorblechpaket der elektrischen Maschine. Um eine maximal zulässige Temperatur im Stator nicht zu überschreiten, wurde bereits vorgeschlagen, einen Kühlmantel für eine Flüssigkeitskühlung des Stators vorzusehen, an den Wärme durch das Statorblechpaket abgeführt werden kann.

Der Erfindung liegt die Aufgabe zugrunde, eine fertigungstechnisch einfach realisierbare und in elektromagnetischer Hinsicht günstige Möglichkeit zur Kühlung eines Stators anzugeben.

Diese Aufgabe wird erfindungsgemäß bei einem Statorblech der eingangs genannten Art dadurch gelöst, dass das Statorblech radial außen an den Winkelpositionen jeweils eine Eintiefung mit einem zumindest abschnittsweise gekrümmt ausgebildeten Rand aufweist.

Die Aufgabe der Erfindung wird insbesondere gelöst durch einen Stator, aufweisend ein Statorblechpaket, das eine Vielzahl von geschichteten Statorblechen aufweist, wobei jedes Statorblech eine Vielzahl von jeweils radial innen an einer Winkelposition ausgebildeten Zahnabschnitte und radial außen an den Winkelpositionen jeweils eine Eintiefung mit einem zumindest abschnittsweise gekrümmt ausgebildeten Rand aufweist, der zwei radial nach außen gewölbte, sich in einem Schnittpunkt treffende, jeweils ein Kreissektorbogen beschreibende Randabschnitte, aufweist, und ein Gehäuseelement mit einem zylindrischen Innenvolumen, in dem das Statorblechpaket angeordnet ist, wobei die Eintiefungen Kühlkanäle bilden.

Die Erfindung beruht auf der Überlegung, dass an den Winkelpositionen, an denen radial innen die Zahnabschnitte ausgebildet sind, der durch Statorwicklungen verursachte magnetische Fluss vergleichsweise gering ist, so dass die Ausbildung der radial äußeren Eintiefung nur einen geringen Einfluss auf das elektromagnetische Verhalten des Stators hat. Die zumindest abschnittsweise gekrümmte Ausbildung des Randes der Eintiefung folgt darüber hinaus dem gekrümmten Verlauf der magnetischen Feldlinien und passt die Geometrie der Eintiefung so hervorragend an diesen Verlauf an. Durch die Eintiefungen können Kühlkanäle für eine Flüssigkeitskühlung eines aus den Statorblechen zusammengesetzten Statorblechpakets gebildet werden. Das erfindungsgemäße Statorblech ermöglicht mit Vorteil durch die fertigungstechnisch einfach zu realisierende Ausbildung der Eintiefungen eine erhebliche Verbesserung des Betriebsverhaltens eines mithilfe der Statorbleche gebildeten Stators.

Typischerweise sind die Zahnabschnitte dadurch ausgebildet, dass radial innen zwischen den Winkelpositionen Nuten im Statorblech ausgebildet sind. Das Statorblech ist bevorzugt aus einem Weicheisenmaterial gebildet. Typischerweise weist das Statorblech eine kreisrunde Grundform auf.

Gemäß einer ersten vorteilhaften Ausgestaltungsalternative ist vorgesehen, dass der Rand zwei radial nach außen gewölbte, sich in einem Schnittpunkt treffende, insbesondere jeweils einen Kreissektorbogen beschreibende, Randabschnitte aufweist. Diese Ausbildung des Rands verfolgt den annäherungsweisen koaxialen Verlauf der magnetischen Feldlinien um die Nuten besonders gut nach.

Gemäß einer zweiten Ausgestaltungsalternative des erfindungsgemäßen Statorblechs ist vorgesehen, dass der Rand radial nach innen, insbesondere ein Kreissegmentbogen beschreibend, gewölbt ist. Auch diese Ausbildung des Rands ist gut an den Verlauf der magnetischen Feldlinien angepasst.

Um die Kontaktfläche des Statorblechs mit einem die Eintiefung durchfließenden Kühlfluid zu vergrößern, kann vorgesehen sein, dass innerhalb der Eintiefung Erhebungen ausgebildet sind.

Es ist fertigungstechnisch besonders vorteilhaft, wenn der Rand an einer Seite in Umfangsrichtung oder an einer jeweiligen Seite in Umfangsrichtung durch einen Vorsprung begrenzt ist, der über eine kreisrunde Grundform des Statorblechs hinausragt. Die Vorsprünge laufen insbesondere zu ihrem radial äußersten Punkt hin spitz zu. Durch den Vorsprung kann sich das Statorblech beim Einsetzen in ein Gehäuseelement in dieses einschneiden und so eine Befestigung der Statorblechs am Gehäuseelement realisieren bzw. ein Verdrehen des Statorblechs innerhalb des Gehäuseelements verhindern. Beim Einschneiden verdrängtes Material des Gehäuseelements sammelt sich zudem vorteilhafterweise in der Eintiefung.

Ein weiterer Aspekt der Erfindung betrifft ein Statorblechpaket, umfassend eine Vielzahl von geschichteten erfindungsgemäßen Statorblechen.

Dabei kann ein gerades Statorblechpaket realisiert werden, indem die Zahnabschnitte in axialer Richtung fluchten. Alternativ kann auch ein geschrägtes Statorblechpaket realisiert werden, indem benachbarte Statorbleche um einen Winkel versetzt angeordnet sind.

Der erfindungsgemäße Stator umfasst insbesondere dieses Statorblechpaket.

Der erfindungsgemäße Stator umfasst ferner bevorzugt ein Gehäuseelement mit einem zylindrischen Innenvolumen, in dem das Statorblechpaket angeordnet ist.

Im Hinblick auf das Einschneiden der Vorsprünge in das Gehäuseelement wird es bevorzugt, wenn der Vorsprung in das Gehäuseelement hineinragt.

Bevorzugt ist das Gehäuseelement aus einem weicheren Material als das Material der Statorbleche ausgebildet. Das Material des Gehäuseelements kann Aluminium sein.

Insbesondere im Hinblick auf die erste Ausgestaltungsalternative des erfindungsgemäßen Statorblechs wird es bevorzugt, wenn der Schnittpunkt radial außen durch eine Dichtmasse überdeckt ist.

Die der Erfindung zugrunde liegende Aufgabe wird ferner gelöst durch eine elektrische Maschine, umfassend den erfindungsgemäßen Stator und einen innerhalb des Stators angeordneten Rotor.

Außerdem wird die der Erfindung zugrunde liegende Aufgabe gelöst durch ein Fahrzeug, umfassend eine erfindungsgemäße elektrische Maschine, die zum Antreiben des Fahrzeugs eingerichtet ist. Das Fahrzeug kann als Elektrofahrzeug (BEV) oder als Hybridfahrzeug ausgebildet sein.

Die der Erfindung zugrunde liegende Aufgabe wird auch durch ein Verfahren zur Herstellung eines Stators für eine elektrische Maschine gelöst, umfassend folgende Schritte: Bereitstellen eines eine Vielzahl von geschichteten Statorblechen aufweisenden Statorblechpakets, wobei die Statorbleche jeweils eine Vielzahl von jeweils radial innen an einer Winkelposition ausgebildeten Zahnabschnitten und radial außen an den Winkelpositionen jeweils eine Eintiefung mit einem zumindest abschnittsweise gekrümmt ausgebildeten Rand aufweisen; Bereitstellen eines Gehäuseelements mit einem zylindrischen Innenvolumen; und Einsetzen des Statorblechpakets in das Gehäuseelement, so dass durch die Eintiefungen und eine Innenfläche des Gehäuseelements Kühlkanäle ausgebildet werden.

Dabei kann vorgesehen sein, dass Statorbleche verwendet werden, bei denen der Rand an einer Seite in Umfangsrichtung oder an einer jeweiligen Seite in Umfangsrichtung durch einen Vorsprung begrenzt ist, der über eine zylindrische Grundform des Statorblechpakets hinausragt, wobei sich ein jeweiliger Vorsprung beim Einsetzen des Statorblechpakets in die Innenfläche des Gehäuseelements einschneidet.

Sämtliche Ausführungen zum Statorblech lassen sich analog auf den erfindungsgemäßen Stator, die erfindungsgemäße elektrische Maschine, das erfindungsgemäße Fahrzeug und das erfindungsgemäße Verfahren übertragen, so dass auch mit diesen die zuvor genannten Vorteile erzielt werden können.

Weitere Vorteile und Einzelheiten der vorliegenden Erfindung ergeben sich aus den im Folgenden beschriebenen Ausführungsbeispielen sowie anhand der Zeichnungen. Diese sind schematische Darstellungen und zeigen:
- Fig. 1: eine Explosionsdarstellung einer elektrischen Maschine,
- Fig. 2: eine geschnittene Detailansicht eines Stators der elektrischen Maschine,
- Fig. 3: eine geschnittene Detailansicht eines alternativen Stators der elektrischen Maschine,
- Fig. 4: einen geschnittene Detailansicht eines weiteren Stators der elektrischen Maschine, und
- Fig. 5: eine Prinzipskizze eines Fahrzeugs, das die elektrische Maschine umfasst.

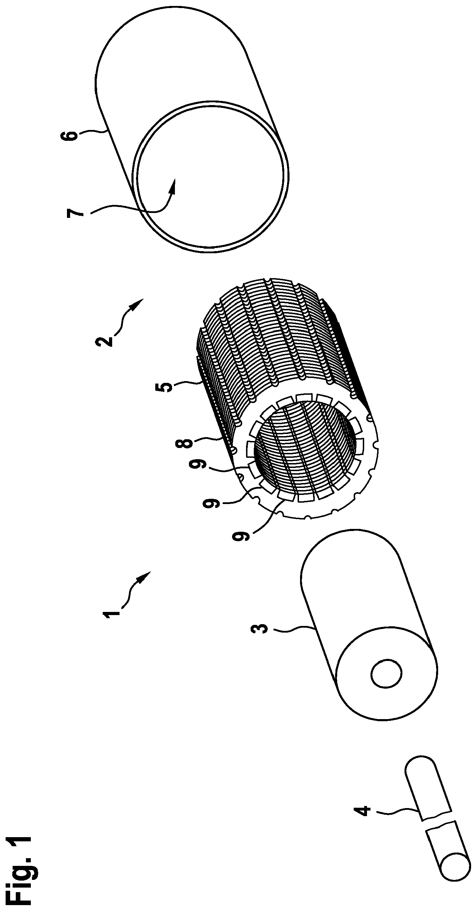

Fig. 1 ist zeigt eine Explosionsdarstellung einer elektrischen Maschine 1, umfassend einen Stator 2, in dem ein Rotor 3 sowie eine drehfest mit diesem verbundene Welle 4 gelagert sind.

Der Stator 2 umfasst ein Statorblechpaket 5 und ein Gehäuseelement 6 mit einem zylindrischen Innenvolumen 7, in dem das Statorblechpaket 5 angeordnet ist. Das Statorblechpaket 5 ist aus einer Vielzahl von geschichteten Statorblechen 8 gebildet. Daneben sind rein schematisch eine Vielzahl von stirnseitig angeordneten Wicklungsköpfen 9 des Stators 2 gezeigt. Im vorliegenden Ausführungsbeispiel sind die Statorbleche 8 aus einem Weicheisenmaterial und das Gehäuseelement aus Aluminium gebildet.

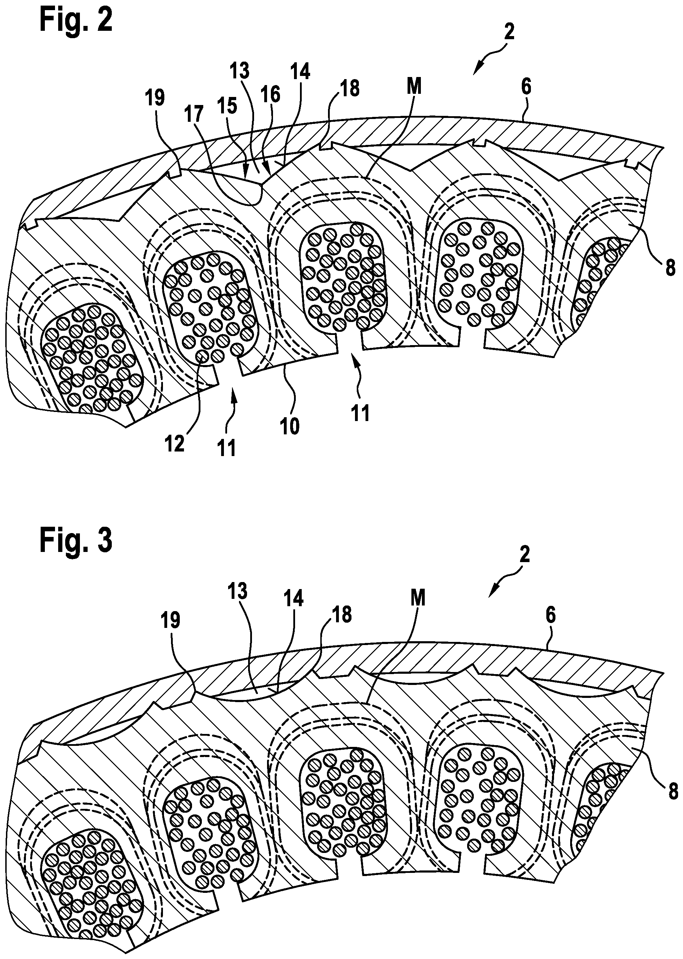

Fig. 2 ist eine geschnittene Detailansicht des Stators 2.

Ein jeweiliges Statorblech 8 umfasst eine Vielzahl von radial an einer Winkelposition ausgebildeten Zahnabschnitten 10. Die Zahnabschnitte 10 sind jeweils durch benachbarte Nuten 11 ausgebildet. Innerhalb der Nuten 11 sind Statorwicklungen 12 des Stators 2 angeordnet, welche die Wickelköpfe 9 ausbilden.

Radial außen weist das Statorblech 8 jeweils eine Eintiefung 13 an einer jeweiligen Winkelposition auf. Ein Rand 14 der Eintiefung 13 umfasst einen ersten Randabschnitt 15 und einen zweiten Randabschnitt 16, die jeweils radial nach außen gewölbt sind und sich in einem Schnittpunkt 17 treffen. Der Schnittpunkt 17 befindet sich an der Winkelposition, an der sich auch eine auf die Umfangsrichtung bezogene Mitte des Zahnabschnitts 10 befindet. Die Randabschnitte 15, 16 beschreiben jeweils einen Kreissektorbogen mit vorzugsweise identischem Radius. Entlang der Schnittpunkte 17 der einzelnen Statorbleche 8 kann eine Dichtmasse auf das Statorblechpaket 5 aufgebracht sein.

Die Eintiefungen 13 können durch diese Form insbesondere hervorragend an den Verlauf von magnetischen Feldlinien M angepasst werden. Mithin nehmen die Eintiefungen nur besonders flussarme Bereiche des Statorblechs 8 ein und haben so nur einen sehr geringen Einfluss auf das elektromagnetische Verhalten des Stators 2.

Die Eintiefungen 13 sind vollständig durch das Gehäuseelement 6 verschlossen, so dass sich in axiale Richtung erstreckendende, durch ein Kühlfluid durchströmbare Kühlkanäle des Stators 2 ausgebildet sind.

Der Rand 14 ist an beiden Seiten in Umfangsrichtung jeweils durch einen Vorsprung 18, 19 begrenzt, der sich über die kreisrunde Grundform des Statorblechs 8 hinaus erstreckt und in das Gehäuseelement 6 hineinragt. Beim Einsetzen der Statorblechpakets 5 (siehe Fig. 1) in das Gehäuseelement 6 schneiden sich die Vorsprünge 18, 19 in das weichere Material des Gehäuseelements 6 ein und befestigen so das Statorblechpaket 5 innerhalb des Gehäuseelements 6. Bei diesem Einschneidevorgang abgespantes Material kann sich vorteilhafterweise in den Eintiefungen sammeln und einfach entfernt werden.

Die Fig. 3 zeigt eine geschnittene Detailansicht einer alternativen Ausführungsbeispiels des Stators 2 mit weiteren Ausführungsbeispielen des Statorblechpakets 5 und des Statorblechs 8. Die Ausführungsbeispiele unterscheiden sich von den zuvor beschriebenen Ausführungsbeispielen dadurch, dass der Rand 14 der Eintiefung 13 radial nach innen gewölbt ist und einen Kreissegmentbogen beschreibt. Auch bei einer solchen Form der Eintiefungen 13 werden nur flussarme Bereiche des Statorblechs 8 für die Ausbildung der Kühlkanäle verwendet.

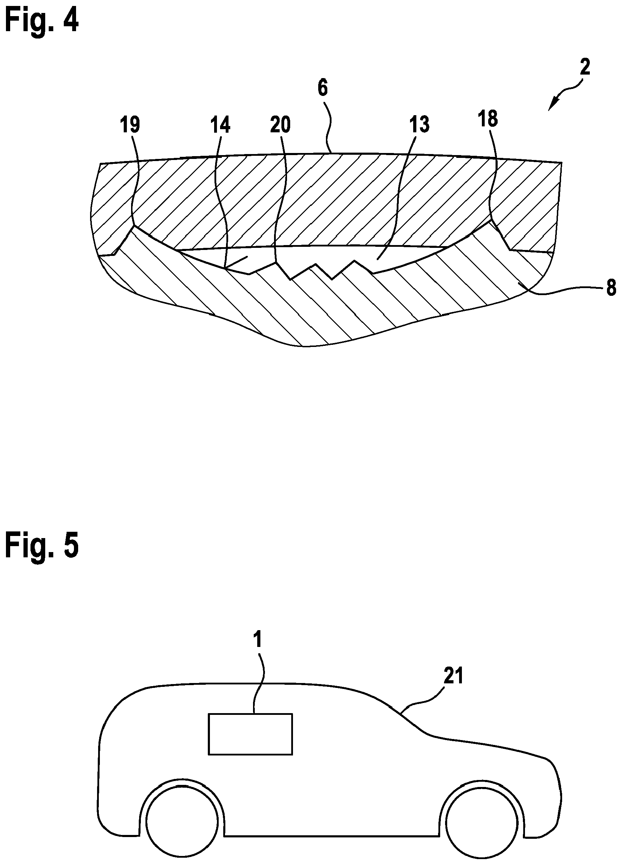

Die Fig. 4 zeigt eine geschnittene Detailansicht eines weiteren Ausführungsbeispiels des Stators 2 mit weiteren Ausführungsbeispielen des Statorblechpakets 5 und des Statorblechs 8, welche den Ausführungsbeispielen gemäß Fig. 3 entsprechen. Bei diesen Ausführungsbeispielen weisen die Eintiefungen 13 zusätzlich Erhebungen 20 auf, so dass der Rand 14 nur abschnittsweise gekrümmt ausgebildet ist. Die Erhebungen 20 können gemäß weiteren Ausführungsbeispielen auch in den Eintiefungen 13 gemäß Fig. 2 ausgebildet sein.

Gemäß einem weiteren Ausführungsbeispiel des Statorblechpakets 5, welches im Übrigen dem Statorblechpaket 5 eines der zuvor beschriebenen Ausführungsbeispiele des Stators 2 entspricht, sind die Statorbleche 8 jeweils um einen Winkel versetzt geschichtet angeordnet, so dass ein geschrägtes Blechpaket ausgebildet wird.

Die Fig. 5 zeigt eine Prinzipskizze eines Fahrzeugs 21, beispielsweise eines Elektrofahrzeuges (BEV) oder eines Hybridfahrzeuges. Das Fahrzeug 21 weist eine elektrische Maschine 1 nach einem der zuvor beschriebenen Ausführungsbeispiele auf, welche zum Antreiben des Fahrzeugs 21 eingerichtet ist.

## Patentansprüche

1. Stator, aufweisend
ein Statorblechpaket (5), das eine Vielzahl von geschichteten Statorblechen (8) aufweist, wobei jedes Statorblech (8) eine Vielzahl von jeweils radial innen an einer Winkelposition ausgebildeten Zahnabschnitten (10) und radial außen an den Winkelpositionen jeweils eine Eintiefung (13) mit einem zumindest abschnittsweise gekrümmt ausgebildeten Rand (14) aufweist, der zwei radial nach außen gewölbte, sich in einem Schnittpunkt (17) treffende, jeweils ein Kreissektorbogen beschreibende Randabschnitte (15, 16) aufweist, und
ein Gehäuseelement (6) mit einem zylindrischen Innenvolumen (7), in dem das Statorblechpaket (5) angeordnet ist, wobei die Eintiefungen (13) Kühlkanäle bilden.

2. Stator nach Anspruch 1, wobei innerhalb der Eintiefung (13) Erhebungen (20) ausgebildet sind.

3. Stator nach Anspruch 1 oder 2, wobei der Rand (14) an einer Seite in Umfangsrichtung oder an einer jeweiligen Seite in Umfangsrichtung durch einen Vorsprung (18, 19) begrenzt ist, der über eine kreisrunde Grundform des Statorblechs (8) hinausragt.

4. Stator nach Anspruch 3, wobei der Vorsprung (18, 19) in das Gehäuseelement (6) hineinragt.

5. Elektrische Maschine (1), umfassend einen Stator (2) nach einem der Ansprüche 1 bis 4 und einen innerhalb des Stators (2) angeordneten Rotor (3).

6. Fahrzeug, umfassend eine elektrische Maschine (1) nach Anspruch 5, die zum Antreiben des Fahrzeugs (21) eingerichtet ist.

7. Verfahren zur Herstellung eines Stators (2) nach eine der Ansprüche 1 bis 4, umfassend folgende Schritte:
- Bereitstellen eines eine Vielzahl von geschichteten Statorblechen (8) aufweisenden Statorblechpakets (5), wobei die Statorbleche (8) jeweils eine Vielzahl von jeweils radial innen an einer Winkelposition ausgebildeten Zahnabschnitten (10) und radial außen an den Winkelpositionen jeweils eine Eintiefung (13) mit einem zumindest abschnittsweise gekrümmt ausgebildeten Rand (14) aufweisen;
- Bereitstellen eines Gehäuseelements (6) mit einem zylindrischen Innenvolumen (7); und
- Einsetzen des Statorblechpakets (5) in das Gehäuseelement (6), so dass durch die Eintiefungen (13) und eine Innenfläche des Gehäuseelements (6) die Kühlkanäle ausgebildet werden.

8. Verfahren nach Anspruch 7, wobei Statorbleche (8) verwendet werden, bei denen der Rand (14) an einer Seite in Umfangsrichtung oder an einer jeweiligen Seite in Umfangsrichtung durch einen Vorsprung (18, 19) begrenzt ist, der über eine zylindrische Grundform des Statorblechpakets (5) hinausragt, wobei sich ein jeweiliger Vorsprung (18, 19) beim Einsetzen des Statorblechpakets (5) in die Innenfläche des Gehäuseelements (6) einschneidet.
